# EUROPÄISCHE PATENTSCHRIFT

(11) **EP 3 237 251 B1**
(45) Veröffentlichungstag und Bekanntmachung des Hinweises auf die Patenterteilung: **07.04.2021**
(21) Anmeldenummer: 15828491.9
(22) Anmeldetag: 16.12.2015
(51) Int. Cl.: B60K 37/00, G06F 3/03

(54) **ANWENDERSCHNITTSTELLE FÜR EIN FORTBEWEGUNGSMITTEL UMFASSEND EINE FINGERLEISTE UND FORTBEWEGUNGSMITTEL DAMIT**
USER INTERFACE FOR A VEHICLE COMPRISING A FINGER STRIP AND VEHICLE THEREWITH
INTERFACE UTILITSATEUR POUR UNMOYEN DE TRANSPORT COMPRENANT UN RAIL POUR LES DOIGTS ET LES MOYENS DE TRANSPORT QUI L'UTILISENT

(30) Priorität: 22.12.2014 DE 102014226760; 02.01.2015 DE 102015200007
(43) Veröffentlichungstag der Anmeldung: 01.11.2017
(73) Patentinhaber: Volkswagen AG, 38440 Wolfsburg (DE)
(72) Erfinder: WILD, Holger, 10179 Berlin (DE); KÖTTER, Nils, 38118 Braunschweig (DE)
(74) Vertreter: Hoefer & Partner Patentanwälte mbB
(86) Internationale Anmeldenummer: PCT/EP2015/080008
(87) Internationale Veröffentlichungsnummer: WO 2016/102268

(56) Entgegenhaltungen:
- EP-A1- 1 895 392
- WO-A1-2013/074866
- DE-A1-102008 023 505
- DE-A1-102008 046 764
- DE-A1-102011 086 859
- DE-A1-102012 008 681
- US-A1- 2009 176 469
- US-A1- 2013 169 560

## Beschreibung

Die vorliegende Schrift betrifft in einem ersten Aspekt ("Fingerleiste") die Offenbarung eines Infotainmentsystems, eines Fortbewegungsmittels und einer Vorrichtung zur Bedienung eines Infotainmentsystems eines Fortbewegungsmittels und in einem zweiten Aspekt ("Anwendung der Fingerleiste") die Erfindung eines Fortbewegungsmittels und einer Anwendungsschnittstelle zur Handhabung von Favoriten mittels einer Fingerleiste.

### Beschreibung der Offenbarung "Fingerleiste"

### Infotainmentsystem, Fortbewegungsmittel und Vorrichtung zur Bedienung eines Infotainmentsystems eines Fortbewegungsmittels

### Stand der Technik

Die vorliegende Offenbarung betrifft ein Fortbewegungsmittel, ein Infotainmentsystem sowie eine Vorrichtung zur Bedienung eines Infotainmentsystems eines Fortbewegungsmittels. Insbesondere betrifft die vorliegende Offenbarung eine Möglichkeit zur Eingabe stufenloser Eingabewerte mittels Wischgesten, ohne dass der Anwender zur Vornahme gezielter Eingaben seinen Blick auf die Anwenderschnittstelle richten muss.

Der Trend in den Cockpits aktueller Fortbewegungsmittel, insbesondere Kraftfahrzeuge, geht derzeit zu einem schalterlosen Design. Da hierbei auch auf herkömmliche Dreh-Drück-Steller verzichtet werden soll, wodurch kein wesentliches haptisches Feedback auf Anwendereingaben folgt, besteht der Bedarf an einer Anwenderschnittstelle und einem Eingabeelement, welches sich gut in die Optik eines schalterlosen Cockpits integriert und dem Kunden dennoch eine gute Orientierung sowie eine optische Rückmeldung beim Einstellen wichtiger Funktionen (wie z.B. Audio-Lautstärke, Scrollen in langen Listen, Klimabedienung, etc.) gibt.

DE 10 2012 008 681 A1 offenbart eine Multifunktionsbedieneinrichtung für ein Kraftfahrzeug, bei welchem eine kombinierte Slider-/Tastfläche zur Entgegennahme von Wischgesten und Druckeingaben vorgesehen ist. Das Bedienelement ist länglich oder rechteckig ausgeführt, wobei ein erhabener Randvorsprung einer Führung des Fingers des Anwenders dient. Vorzugsweise ist das Bedienelement seitlich der Bildschirmanzeige im Wesentlichen vertikal angeordnet.

DE 10 2013 000 110 A1 offenbart ein Bedienverfahren und ein Bediensystem in einem Fahrzeug, bei welchem im Ansprechen auf eine Berührung einer berührungsempfindlichen Oberfläche auf einer zweiten Anzeigefläche auf einer ersten Anzeigefläche angezeigte Schaltflächen derart verändert werden, dass auf der ersten Anzeigefläche zu der Schaltfläche gehörige Zusatzinformationen angezeigt werden. Hierzu wird eine berührungsempfindliche Oberfläche für eine kapazitive Wechselwirkung mit einem Betätigungsobjekt (z.B. ein kapazitiver Touch-Screen) vorgesehen.

DE 10 2008 048 825 A1 offenbart ein Anzeige- und Bediensystem in einem Kraftfahrzeug mit benutzeradaptiver Darstellung, wobei über eine Nutzereingabe ein Modifiziermodus aktivierbar ist, in dem eine grafische Darstellung aller Anzeigeobjekte zumindest teilweise in einem Teilbereich der Anzeigefläche erfolgt. Auf diese Weise können zuvor über eine gesamte Anzeigefläche verteilte Objekte in einem solchen Teilbereich angezeigt werden, welcher in einem Greifraum eines Anwenders befindlich ist.

US 2013/169560 A1 offenbart eine Anwenderschnittstelle zu blickgesteuerten Interaktion zwischen einem Anwender und einer technischen Einrichtung.

US 2009/017646 A1 offenbart ein Entertainmentsystem für ein Fahrzeug, bei welchem über einen touch-screen sogenannte "soft key buttons" bewegt und belegt werden können.

DE 10 2008 023 505 A1 offenbart ein farbkodiertes Infotainment-System, bei welchem vorgesehen ist, das mindestens eine programmierbare Lichtquelle außerhalb der Anzeigevorrichtung Licht in unterschiedlichen Farbkodierungen erzeugt. Durch die Übereinstimmung auf einem Display dargestellter Farbelemente und der Farbe eines Ambientelichts wird eine farbliche Harmonie einer Erscheinung eines Interieurs eines Fortbewegungsmittels erzielt.

DE 10 2008 046 764 A1 offenbart eine Multifunktions-Bedieneinrichtung, bei welcher in Hardware ausgestalteten Tasten durch den Anwender eine Funktion zugeordnet werden kann.

Ausgehend vom vorstehend zitierten Stand der Technik ist es eine Aufgabe der vorliegenden Offenbarung, eine komfortable Eingabeeinrichtung für Wischgesten optisch vorteilhaft in das Interieur eines Fortbewegungsmittels zu integrieren. Es ist eine weitere Aufgabe der vorliegenden Offenbarung, Rückmeldungen an einen Anwender eines solchen Systems intuitiv verständlich zu gestalten.

Die vorstehend identifizierte Aufgabe wird durch eine Vorrichtung zur Bedienung eines Infotainmentsystems eines Fortbewegungsmittels gelöst. Die Vorrichtung umfasst eine linien- oder kurvenförmig erstreckte Fingerleiste, welche zur haptischen (Längs-)Führung eines Fingers eines Anwenders eingerichtet ist. Mit anderen Worten wird eine eindimensionale Spur für den Finger des Anwenders vorgegeben. Eine solche Spur weist quer zu ihrer Längsrichtung insbesondere eine konkave und/oder eine konvexe (Teil-)Struktur auf, welche im Zuge einer Wischgeste von einem Anwender haptisch erfasst und zur Orientierung des Fingers auf der Fingerleiste verwendet werden kann. Zudem ist eine Erfassungseinheit zur Erfassung auf der Fingerleiste ausgeführter Wischgesten vorgesehen. Die Erfassungseinheit kann (beispielsweise kapazitiv) eine auf der Fingerleiste ausgeführte Bewegung menschlichen Gewebes erfassen und in elektrische Signale wandeln. Eine Auswerteeinheit ist zur Verarbeitung erfasster Wischgesten (bzw. durch diese erzeugten Signale) vorgesehen und kann in Form eines programmierbaren Prozessors, eines Mikrocontrollers, eines Nanocontrollers, o.ä., ausgeführt sein. Zudem weist die Vorrichtung einen linienförmigen Lichtauslass auf, welcher sich zumindest annähernd vollständig entlang der Fingerleiste erstreckt. Der Lichtauslass kann ein teilweise transparenter Kunststoff und/Glaskörper und/oder Sinterkörper sein, durch welchen ein hinter ihm liegendes Leuchtmittel Licht in Richtung des Anwenders ausschütten kann. Im Ansprechen auf eine mittels der Erfassungseinheit detektierte Anwendergeste kann die Vorrichtung die Anwendergeste mittels eines aus dem Lichtauslass emittierten Lichtsignals quittieren. Beispielsweise kann eine gestartete Funktion durch ein der Funktion zugeordnetes Lichtmuster quittiert werden. Das Lichtmuster kann auch eine oder mehrere Farben aufweisen, welche der jeweils gestarteten Funktion eindeutig zugeordnet sind. Auch unabhängig von einem erfolgreichen Start einer der Geste zugeordneten Funktion kann die Betätigung der Vorrichtung durch eine Ausgabe eines entsprechenden Lichtsignals quittiert werden. Insbesondere im Falle einer Wischgeste kann ein Schimmer (auch "Glow" oder "Corona") um den oder die Finger erzeugt werden, der sich mit dem Finger bewegt, wodurch der Anwender darüber in Kenntnis gesetzt wird, in welcher Weise die Vorrichtung seine Geste erfasst hat. Als Anwendergeste kann auch bereits ein Annähern bzw. ein Auflegen eines Fingers oder mehrerer Finger verstanden werden, wobei ein Lauflicht oder mehrere Lauflichter den Lichtauslass (z.B. startend an dessen Rand oder an dessen Rändern) entlang in Richtung des Fingers oder der Finger erzeugt wird, so dass auch ungeübte Anwender ein intuitiv verständliches Signal darüber erhalten, dass sie soeben eine Eingabeschnittstelle gefunden bzw. verwendet haben.

Die Fingerleiste kann beispielsweise zur horizontalen Anordnung vorgesehen sein. Dies hat den Vorteil, dass in vertikaler Richtung ein Sims bzw. eine Auflage für einen Finger ausgebildet wird, wodurch in vertikaler Richtung entstehende Beschleunigungen (z.B. beim Durchfahren einer Bodenwelle oder eines Schlaglochs) den Finger des Anwenders nicht aus einem beabsichtigten Raumbereich vor der Fingerleiste bewegen. Besonders intuitiv wird die Bedienung der Vorrichtung, wenn die Fingerleiste oberhalb und/oder unterhalb einer Anzeigefläche in einem Fortbewegungsmittel angeordnet wird. Auf diese Weise steht die Vorrichtung bzw. die Fingerleiste in einem starken Kontext der Anzeigeflächen und wird intuitiv als Bestandteil einer Anwenderschnittstelle verstanden. Eine besonders angenehme und selbsterklärende Haptik ergibt sich bei Ausgestaltung der Fingerleiste in Form einer rinnen- oder muldenförmigen Längsnut, welche beispielsweise einer Oberfläche eines (ebenen oder gewölbten) Bildschirms folgt.

Bevorzugt ist der Lichtauslass in die Fingerleiste eingelassen, wodurch das emittierte Lichtsignal besonders stark mit der Anwendergeste assoziiert wird. Mit anderen Worten wird bei einer Bedienung der Fingerleiste auch der Lichtauslass überstrichen, so dass das quittierende Lichtsignal in unmittelbarer Nähe und insbesondere auch unter dem jeweiligen Finger des Anwenders angeordnet zu sein scheint.

Eine geeignete Möglichkeit zur Realisierung der quittierenden Lichtsignale besteht darin, hinter dem Lichtauslass eine Lichtquelle anzuordnen, welche einzelne Leuchtmittel (z.B. lichtimitierende Dioden, LEDs) umfasst, welche eine besonders schnelle Ansprechgeschwindigkeit bezüglich sie ansteuernder elektrischer Signale aufweisen. Dies ermöglicht eine besonders präzise Ausgabe, die Anwendergeste quittierender Lichtsignale. Insbesondere kann ein transluzentes (umgangssprachlich auch "milchig") Element zur Homogenisierung vom Lichtauslass ausgeschütteten Lichtes vorgesehen sein. Auf diese Weise sorgt das transluzente Element für eine Diffusion des eingestrahlten Lichtes in Richtung des Anwenders, wodurch einerseits die inhomogene Lichtquelle optisch attraktiver in Erscheinung tritt und dennoch eine präzise Positionierung des Lichtsignals möglich ist.

Die Vielfalt möglicher Eingaben wird dem Anwender besonders ersichtlich, wenn die Fingerleiste beidseitig durch optisch und/oder haptisch abgegrenzte Endbereiche zur Ausbildung von Tastenfeldern begrenzt ist. Beispielsweise können Stege quer zur Längserstreckung der Fingerleiste vorgesehen sein, welche der Anwender deutlich fühlen kann. Alternativ oder zusätzlich können quer zur Längsrichtung der Fingerleiste erstreckte Nuten vorgesehen sein, einen Wischbereich zwischen den Endbereichen optisch und haptisch gegenüber den Tastenfeldern abzugrenzen. Auch eine Bedienung der Tastenfelder kann auf diese Weise im Wesentlichen ohne ein optisches Erfassen der Vorrichtung durch den Anwender erfolgen. Dies erhöht die Verkehrssicherheit während der Bedienung der Vorrichtung. Beispielsweise können wiederholende Tipp-Eingaben bezüglich eines der Tastenfelder verwendet werden, um eine dem Wischbereich zugeordnete Funktion zu wechseln (englisch: "toggling"). Mögliche Funktionen, welche mittels der Tastenfelder "durchgeschaltet" werden können, werden im weiteren Verlauf der vorliegenden Beschreibung erläutert. Beispielsweise kann eine für den Wischbereich gewählte Funktion mittels einer Langdruck (englisch: "longpress")-Geste auch für zukünftige Bedienschritte dem Wischbereich zugeordnet werden. Auf diese Weise kann eine dauerhafte Zuordnung einer vom Anwender gewünschten Funktion zum Wischbereich erfolgen.

Der Lichtauslass kann bevorzugt eingerichtet sein, im Bereich der Tastenfelder unabhängig von einer aktuellen Lichtfarbe in sämtlichen anderen Bereichen der Fingerleiste eine vordefinierte andere Lichtfarbe auszugeben. Entsprechendes gilt für eine Lichtintensität. Mit anderen Worten sind die Bereiche des Lichtauslasses in den Endbereichen bevorzugt optisch undurchlässig gegenüber dem Wischgestenbereich der Fingerleiste abgegrenzt. Beispielsweise können drei transluzente Komponenten des Lichtauslasses im Bereich der optischen und/oder haptischen Abgrenzung durch zwei opake (also optisch "undurchlässige") Strukturen unterbrochen werden. Beispielsweise können diese optischen Unterbrechungen aus einer Oberfläche der Fingerleiste derart hervorstehen, dass sie für eine haptische Begrenzung der Endbereiche sorgen. Bevorzugt wird ein optisches Übersprechen von Licht zumindest vermieden, indem die opaken Strukturen in Richtung des Anwenders nicht von transluzenten Elementen überlagert sind. Eine besonders homogene Oberfläche kann indes erreicht werden, indem ein vollständig transparentes Element die Oberfläche der Fingerleiste bildet.

Die Erfassungseinheit kann eine lineare Anordnung einer Vielzahl kapazitiver Antennen aufweisen, welche in Haupterstreckungsrichtung (Längsrichtung) der Fingerleiste in einem Bereich hinter der Fingerleiste nebeneinander angeordnet sind. Mit anderen Worten folgen die einzelnen kapazitiven Antennen der Linienform der Fingerleiste, so dass besonders viele unterschiedliche Eingabepositionen auf der Fingerleiste von der Erfassungseinheit aufgelöst und der Auswerteeinheit gemeldet werden können. Gegenüber kapazitiven Oberflächen berührungsempfindlicher Bildschirme bieten die einzelnen kapazitiven Antennen den Vorteil einer flexibleren Auslegbarkeit hinsichtlich Empfindlichkeit und Reichweite. Beispielsweise kann die Erfassungseinheit nicht lediglich Berührungen, sondern auch Annäherungen eines Anwenders ohne Kontakt mit der Fingerleiste erfassen und der Auswerteeinheit melden.

Beispielsweise kann die Vorrichtung eine Anzeigeeinheit mit einer berührungsempfindlichen Oberfläche und eine linien- oder kurvenförmig erstreckte haptische Barriere auf der Anzeigeeinheit aufweisen. Die Barriere dient zur Abgrenzung einer Anzeigefläche der Anzeigeeinheit gegenüber einem zur Ausgestaltung einer Fingerleiste vorgesehenen Randbereich der Anzeigeeinheit. Ein im Bereich der Fingerleiste angeordnetes Segment der berührungsempfindlichen Oberfläche der Anzeigeeinheit dient also als Erfassungseinheit zur Erfassung von Druck-/Tipp- und Wischgesten eines Anwenders. Entsprechend kann ein im Bereich der Fingerleiste angeordnetes Segment der Anzeigeeinheit den Lichtauslass der Vorrichtung bilden. Mit anderen Worten ist der Lichtauslass als linienförmiges Segment einer selbstleuchtenden Anzeigeeinheit ausgestaltet. Durch die haptische Barriere kann die Anzeigeeinheit einerseits die Anzeigefläche und andererseits die Erfassungseinheit und den Lichtauslass der Vorrichtung bereitstellen, obwohl die Anzeigeeinheit als einstückiges Element gefertigt werden kann. Dies erhöht die Stabilität der Vorrichtung, senkt die Bauteilanzahl, erübrigt Montagevorgänge und senkt Kosten für die Produktion. Überdies vermeiden einstückige Komponenten im Fahrzeugbau Probleme des Knarzens, Klapperns und unerwünschten Schmutzeintrages, wodurch Fehlfunktionen vorgebeugt wird.

Bevorzugt kann weiter eine Annäherungssensorik vorgesehen sein, wobei die Auswerteeinheit eingerichtet ist, eine mittels der Annäherungssensorik erfasste Geste mittels eines aus dem Lichtauslass emittierten Lichtsignals zu quittieren. Mit anderen Worten wird nicht erst eine berührende Interaktion des Anwenders mit der Fingerleiste quittiert, sondern ein Lichtsignal bereits im Ansprechen auf eine Annäherung des Anwenders an die Fingerleiste ausgegeben, um den Anwender darüber in Kenntnis zu setzen, dass die Möglichkeit einer berührenden Eingabe mit der Vorrichtung besteht und wie eine solche Interaktion aussehen könnte. Dies kann beispielsweise durch Lichtverläufe und/oder Blinkmuster erfolgen, wodurch der Anwender zur Eingabe von Wisch- bzw. Multitouch-Gesten animiert wird.

Bevorzugt ist die Auswerteeinheit eingerichtet, eine erste vordefinierte Geste auf der Fingerleiste zur Anpassung einer Lautstärke einer Medienwiedergabe auszuwerten. Die erste Geste kann beispielsweise eine Wischgeste mit einem einzelnen Finger sein. Alternativ oder zusätzlich ist die Auswerteeinheit eingerichtet, eine zweite vordefinierte Geste auf der Fingerleiste zur Anpassung einer Lautstärke einer Sprachausgabe des Infotainmentsystems auszuwerten. Die zweite Geste kann beispielsweise eine Wischgeste mit genau zwei Fingern (Mehrfachberührungsgeste, Multitouch-Geste) sein. Alternativ oder zusätzlich kann die Auswerteeinheit eingerichtet sein, eine dritte vordefinierte Geste auf der Fingerleiste zur Anpassung einer Lautstärke von Klangzeichen bzw. akustischen Warntönen auszuwerten. Die dritte Geste kann beispielsweise eine mit genau drei Fingern ausgeführte Multitouch-Wischgeste sein. Eine Zuordnung zwischen den vorstehend genannten Gesten und beispielhaften Funktionsumfängen kann in beliebiger Weise abgeändert werden, ohne den Bereich der vorliegenden Offenbarung zu verlassen.

Je nach dem, welche Art von Geste bzw. welche Art durch die Geste gestarteter Funktion vorliegt, kann ein jeweiliger Hinweistext und/oder ein jeweiliges Hinweissymbol auf einer Anzeigeeinheit der Vorrichtung ausgegeben werden.

Alternativ oder zusätzlich kann ein über den Lichtauslass ausgegebenes Lichtsignal die Funktion und die Art der erfassten Geste unabhängig voneinander quittieren. Beispielsweise kann die Art der Geste durch eine Position bzw. mehrere Positionen erhöhter Lichtintensität veranschaulicht bzw. quittiert werden. Durch die Verwendung unterschiedlicher Farben können die bedienten Funktionen veranschaulicht werden. Beispielsweise kann bei einer Wischgestenbedienung einer Klimafunktion das Lichtsignal in Abhängigkeit einer Verringerung oder Erhöhung einer Solltemperatur in Richtung blau bzw. in Richtung rot verändert werden. Sofern die Funktion eine Lautstärkeveränderung ist, kann von einem weißen Licht in Richtung roten Lichts gewechselt werden, wenn die Lautstärke erhöht wird bzw. anders herum von einer roten Lichtfarbe zu weißem Licht gewechselt werden, wenn die Lautstärke verringert wird. Selbstverständlich kann der Lichtauslass annähernd vollständig mit Licht einer ersten Farbe beaufschlagt werden, um die Art und Weise der Funktionsanpassung zu veranschaulichen, während eine zweite Farbe für im Bereich der Finger des Anwenders ausgeschütteten Lichts gewählt wird, wodurch die erfasste Geste (z.B. unabhängig von einer angepassten Funktion) quittiert wird.

Die Auswerteeinheit kann weiter eingerichtet sein, im Ansprechen auf ein Verstreichen einer vordefinierten Zeitdauer nach einem Ende einer mittels der Erfassungseinheit erfassten Geste ein aus dem Lichtauslass emittiertes Lichtsignal einer aktuellen Einstellung des Ambientelichtes des Fortbewegungsmittels anzupassen. Mit anderen Worten kann der Lichtauslass sowie das hinter ihm angeordnete Leuchtmittel dazu verwendet werden, ein Ambientelichtkonzept zu unterstützen, sofern die Fingerleiste akut nicht zur Entgegennahme von Anwendergesten bzw. zu deren Quittierung verwendet wird. Die vordefinierte Zeitdauer, nach welcher im Nachgang einer Anwenderinteraktion automatisch zum Ambientelichtmodus umgeschaltet wird, kann beispielsweise eine Mindestzeitdauer in Form ganzzahliger Vielfacher einer Sekunde im Bereich zwischen einer Sekunde und 10 Sekunden sein. Auf diese Weise wird die Vorrichtung noch vielfältiger zur optisch ansprechenden und intuitiv sowie komfortabel zu bedienenden Innenraumgestaltung genutzt.

Gemäß einem zweiten Aspekt der vorliegenden Offenbarung wird ein Infotainmentsystem für ein Fortbewegungsmittel vorgeschlagen, welches eine Vorrichtung gemäß dem erstgenannten Erfindungsaspekt umfasst. Mit anderen Worten ist die Vorrichtung in einer Ausgestaltung um Funktionsumfänge wie beispielsweise eine Musikwiedergabe und/oder eine Navigationsfunktion ergänzt. Entsprechend können auch Heiz-/Klimaumfänge über die Vorrichtung angepasst und veranschaulicht werden. Die Merkmale, Merkmalskombinationen und die sich aus diesen ergebenden Vorteile entsprechen dem erstgenannten Aspekt der vorliegenden Offenbarung, so dass zur Vermeidung von Wiederholungen auf die obigen Ausführungen verwiesen wird.

Gemäß einem dritten Aspekt der vorliegenden Offenbarung wird ein Fortbewegungsmittel mit einem Infotainmentsystem entsprechend dem zweitgenannten Erfindungsaspekt oder einer Vorrichtung gemäß dem erstgenannten Erfindungsaspekt vorgeschlagen. Das Fortbewegungsmittel kann beispielsweise ein PKW, ein Transporter, ein LKW, ein Motorrad, ein Luft- und/oder Wasserfahrzeug sein. Auch bezüglich der Merkmale, Merkmalskombinationen und der sich aus diesen ergebenden Vorteile des Fortbewegungsmittels wird zur Vermeidung von Wiederholungen auf die obigen Ausführungen verwiesen.

### Kurze Beschreibung der Zeichnungen

Nachfolgend werden Ausführungsbeispiele der Offenbarung unter Bezugnahme auf die begleitenden Zeichnungen im Detail beschrieben. In den Zeichnungen ist:
- Figur 1: eine schematische Übersicht über Komponenten eines Ausführungsbeispiels eines Fortbewegungsmittels mit einem Ausführungsbeispiel einer Vorrichtung;
- Figur 2: eine perspektivische Zeichnung eines Ausführungsbeispiels einer Vorrichtung;
- Figur 3: eine Detailansicht eines Ausschnittes des in Figur 2 gezeigten Ausführungsbeispiels;
- Figur 4: eine Draufsicht auf ein Ausführungsbeispiel einer Erfassungseinheit mit einer Vielzahl kapazitiver Antennen; und
- Figur 5: eine Prinzipskizze, veranschaulichend ein Ausführungsbeispiel einer Vorrichtung, bei welchem eine Anzeigeeinheit mit berührungsempfindlicher Oberfläche eine Anzeigefläche, eine Erfassungseinheit und einen Lichtauslass einer Vorrichtung bereitstellt.

### Ausführungsformen der Offenbarung

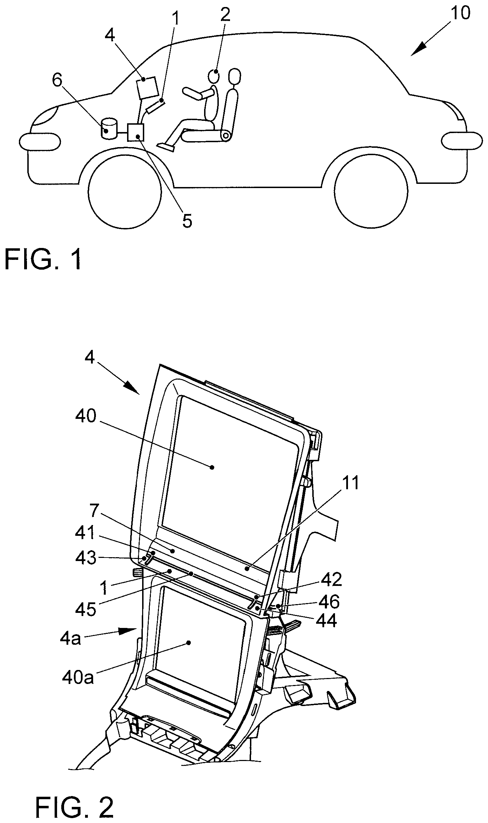

Figur 1 zeigt einen PKW 10 als Fortbewegungsmittel, in welchem ein Bildschirm 4 als Anzeigeeinheit informationstechnisch mit einem elektronischen Steuergerät 5 als Auswerteeinheit verbunden ist. Eine horizontal unterhalb des Bildschirms 4 angeordnete Fingerleiste 1 ist zur Erfassung von Anwendergesten sowie zur optischen Quittierung derselben mittels Lichtsignalen informationstechnisch mit dem elektronischen Steuergerät 5 verbunden. Ein Datenspeicher 6 hält vordefinierte Referenzen zur Klassifikation der Anwendergesten bereit und dient der Definition den klassifizierten Anwendergesten zugeordneter Lichtsignalmuster. Ein Anwender 2 streckt seinen Arm im Wesentlichen horizontal aus, um eine Wischgeste auf der Fingerleiste 1 vorzunehmen. Vertikalbeschleunigungen des PKWs 10 würden ohne eine Ausgestaltung der Fingerleiste 1 dazu führen, dass der Anwender die Fingerleiste 1 mitunter verfehlt. Zudem müsste der Anwender 2 sein Augenmerk auf die Fingerleiste 1 richten, um seinen Finger sauber auf derselben zu positionieren. Erfindungsgemäß können diese Vorgänge unterbleiben, da die Fingerleiste 1 eine vorteilhafte simsartige Struktur zur Führung des Fingers des Anwenders 2 aufweist.

Figur 2 zeigt ein Ausführungsbeispiel einer Vorrichtung mit zwei Bildschirmen 4, 4a, welche im Wesentlichen übereinander zur Anordnung in einer Mittelkonsole bzw. einem Armaturenbrett eines Fortbewegungsmittels vorgesehen sind. Die Anzeigeflächen 40, 40a der Bildschirme 4, 4a sind von oben nach unten der Reihe nach durch einen stegförmigen Rahmenteil 11 als haptische Barriere, eine Infrarot-LED-Leiste 7 als Annäherungssensorik und eine konkav ausgeführte Fingerleiste 1 getrennt, in welche ein linienförmiger Lichtauslass 45 eingelassen ist, welcher der Längserstreckungsrichtung der Fingerleiste 1 folgt. Distale Bereiche 43, 44 der Fingerleiste 1 sind durch senkrecht zur Längserstreckungsrichtung orientierte Stegstrukturen 41, 42 gegenüber einem mittleren Wischgestenbereich der Fingerleiste 1 als Schaltflächen abgegrenzt bzw. kenntlich gemacht. An den linienförmigen Lichtauslass 45 grenzt ein sich im Wesentlichen in Fahrtrichtung erstreckender Lichtleiter 46, welcher aus Fahrtrichtung stammendes Licht zur Erzeugung quittierender Lichtsignale in Richtung des Anwenders leitet.

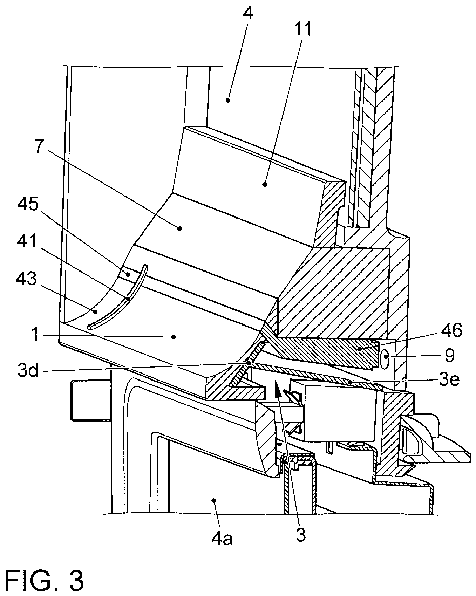

Figur 3 zeigt eine Detailansicht des in Figur 2 dargestellten Ausführungsbeispiels einer Vorrichtung. In dieser Ansicht ist exemplarisch eine LED 9 als Leuchtmittel einer Lichtquelle in Fahrtrichtung am Lichtleiter 46 vorgesehen, durch welche ein schmaler, jedoch diffus bzw. unscharf begrenzter Bereich des Lichtaustritts 45 im Licht der LED 9 erstrahlt. Kurz unterhalb der Oberfläche der Fingerleiste 1 ist ein Träger 3d einer kapazitiven Erfassungseinheit 3 angeordnet, welcher mit einer Platine 3e mechanisch und elektrisch verbunden ist. Die Platine 3e trägt (nicht dargestellte) elektronische Bauelemente zum Betrieb der Erfassungseinheit 3.

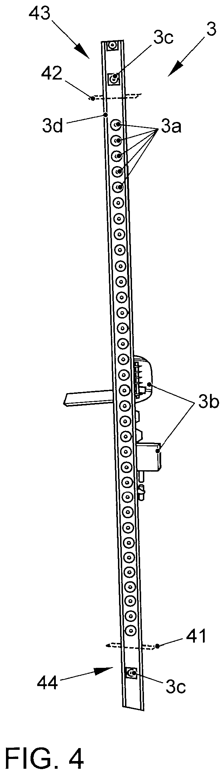

Figur 4 zeigt ein Ausführungsbeispiel einer Erfassungseinheit 3, wie sie in Figur 3 vorgestellt worden ist. In der Draufsicht nach Figur 4 sind linienförmig nebeneinander angeordnete kapazitive Antennen 3a auf dem Träger 3d zu erkennen, welche jeweils eine kreisscheibenförmige Gestalt aufweisen und äquidistant zueinander angeordnet sind. Durch gestrichelt dargestellte Stege 41, 42 werden Endbereiche 43, 44 gekennzeichnet, welche jeweils eine quadratisch ausgeführte kapazitive Antenne 3c zur Entgegennahme von Druck- und/oder Tipp- und/oder Long-Press-Gesten aufweisen. Elektronische Bauelemente 3b sind auf der Platine (Bezugszeichen 3e) in Figur 3 angeordnet und für den Betrieb der Antennen 3a, 3c vorgesehen.

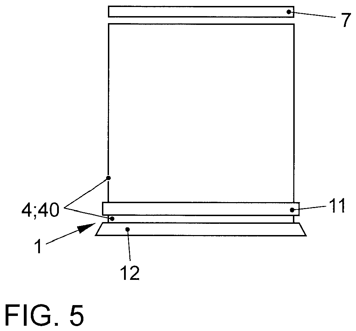

Figur 5 zeigt eine Prinzipskizze eines alternativen Ausführungsbeispiels einer Vorrichtung zur Bedienung eines Infotainmentsystems. Oberhalb eines Bildschirms 4 mit einer Anzeigefläche 40 ist eine Annäherungssensorik 7 zur Erkennung einer Annäherung einer Hand eines Anwenders an die Vorrichtung vorgesehen. Ein im Wesentlichen horizontal erstreckter Steg 11 auf dem Bildschirm 4 begrenzt einen schmalen Oberflächenbereich der Anzeigefläche 40, welcher einer Fingerleiste 1 zugeordnet ist, von einem Hauptanzeigebereich der Anzeigefläche 40. Der Bildschirm 4 ist als Touch-Screen (englisch für: "berührungsempfindliche Anzeigeeinheit") ausgestaltet, wie er im Stand der Technik bekannt ist. Zur Realisierung einer Vorrichtung wird jedoch ein oberhalb des Steges 11 angeordneter Anzeigebereich 40 gänzlich anders angesteuert als ein unterhalb des Steges 11 angeordneter Bereich, welcher die Erfassungseinheit und den Lichtauslass der Vorrichtung bildet. Mit anderen Worten ist ein einstückiger Bildschirm 4 in Form eines Touch-Screens vorgesehen, dessen unterer Rand die Erfassungseinheit und den Lichtauslass der Vorrichtung bildet. Nach unten abgegrenzt wird die Fingerleiste 1 durch einen im Wesentlichen horizontalen Sims 12 zur Auflage eines Fingers und dessen Führung beim Ausführen einer Wischgeste.

### Beschreibung der Erfindung "Anwendung der Fingerleiste"

### "Fortbewegungsmittel und Anwenderschnittstelle zur Handhabung von Favoriten mittels einer Fingerleiste"

### Stand der Technik

Die vorliegende Erfindung betrifft ein Fortbewegungsmittel sowie eine Anwenderschnittstelle zur Handhabung von Favoriten mittels einer Fingerleiste in einem Fortbewegungsmittel. Insbesondere betrifft die vorliegende Erfindung unterschiedliche Möglichkeiten zur Definition und zur Anwahl von Favoriten mittels einer Fingerleiste.

Derzeit geht der Trend beim Interieur von Fortbewegungsmitteln zu einem schalterlosen Design. Hierbei wird auch auf herkömmliche Dreh-Drück-Steller verzichtet. Für Eingaben kontinuierlicher Werte (z.B. Lautstärken, Positionen in einem wiedergegebenen Medieninhalt, Heiz-/Klimabedienumfänge etc.) besteht dennoch der Bedarf nach einem geeigneten Eingabeelement.

DE 10 2008 046 764 A1 offenbart kapazitive Hardwaretaster zum Abspeichern verschiedener Funktionen (siehe auch http://wwww.bmw.de/de/footer/publicationslinks/technology-guide/favoritentasten.html). Diesen Hardwaretastern können keine verschiedenen Piktogramme (Englisch "Icons") oder Grafiken zugeordnet werden.

Sie können lediglich berührt und gedrückt werden, während andere Gesten, wie z.B. Wischen, nicht als solche aufgelöst werden können und daher nicht mit einer vordefinierten Funktion belegt sind.

Es ist eine Aufgabe der vorliegenden Erfindung, eine intuitive und schnelle Möglichkeit zur Definition sowie zur Anwahl von favorisierten Funktionsumfängen ("Favoriten") bereitzustellen.

### Offenbarung der Erfindung

Die vorstehend identifizierte Aufgabe wird erfindungsgemäß durch ein Fortbewegungsmittel sowie eine Anwenderschnittstelle gelöst. Die erfindungsgemäße Anwenderschnittstelle weist eine Eingabevorrichtung zur Erfassung hinsichtlich zweier Dimensionen durch eine Struktur geführter eindimensionaler Wischgesten eines Anwenders auf. In der von der Anmelderin am 22. Dezember 2014 beim Deutschen Patent- und Markenamt eingereichten Anmeldung mit der Nummer DE 10 2014226760.9 und dem Titel "Infotainmentsystem, Fortbewegungsmittel und Vorrichtung zur Bedienung eines Infotainmentsystems eines Fortbewegungsmittels" wird eine solche oben beschriebene und als "Fingerleiste" bezeichnete Eingabeeinrichtung vorgeschlagen, welche als Eingabeeinrichtung für kontinuierliche Eingaben verwendet werden kann. Die Eingabeeinrichtung wird nachfolgend ebenfalls als "Fingerleiste" bezeichnet, da sie insbesondere zur Bedienung mittels einzelner Finger zur Anpassung wertkontinuierlicher Eingabegrößen vorgesehen und eingerichtet ist. Die Fingerleiste kann beispielsweise eine Längsnut und/oder ein Sims zur Auflage eines Fingers während einer im Wesentlichen horizontalen Wischgeste aufweisen. Weiter ist eine Anzeigeeinrichtung (z.B. ein Bildschirm) vorgesehen, welcher zur Anzeige wahlfreier Inhalte nach Art einer Matrixanzeige ausgestaltet sein kann. Schließlich ist eine Auswerteeinheit (z.B. ein elektronisches Steuergerät, umfassend einen programmierbaren Prozessor, einen Mikrocontroller, einen Nanocontroller o.Ä.) vorgesehen. Die Auswerteeinheit ist eingerichtet, mittels der Fingerleiste erfasste Wischgesten zur im Wesentlichen stufenlosen Anpassung einer Ausgabegröße auszuwerten. Zudem kann die Auswerteeinheit mittels der Fingerleiste erfasste Tippeingaben zur Auswahl und/oder zur Definition von Favoriten auswerten. Mit anderen Worten ist vorgesehen, einzelne Positionen (vordefinierte Positionen und/oder wahlfrei vom Anwender belegbar) auf der Fingerleiste einzelnen Favoriten zuordnen zu können und über eine Tippeingabe bezüglich der jeweiligen Position eine mit dem Favoriten assoziierte Funktion zu starten. Auf diese Weise wird die Definition und Auswahl von Favoriten einfacher gestaltet und eine in einer Anwenderschnittstelle vorgesehene Fingerleiste erhält einen zusätzlichen Funktionsumfang, wodurch auf weitere Favoritentasten verzichtet werden kann. Die Unteransprüche zeigen bevorzugte Weiterbildungen der Erfindung.

Bevorzugt kann die Anwenderstelle eine Annäherungssensorik aufweisen, welche eingerichtet ist, eine Annäherung eines Anwenders zu erfassen, im Ansprechen auf welche die Auswerteeinheit eine aus einem Lichtauslass der Fingerleiste ausgeschüttete Lichtfarbe und/oder Helligkeit anpasst. Der Lichtauslass kann beispielsweise Bestandteil der Fingerleiste sein. Insbesondere kann der Lichtauslass eine im Wesentlichen lineare Erstreckung entlang einer Richtung über die Fingerleiste entgegenzunehmender Wischgesten aufweisen. Alternativ oder zusätzlich ist die Auswerteeinheit der erfindungsgemäßen Anwenderschnittstelle eingerichtet, vordefinierte Segmente der Fingerleiste bezüglich mit den Segmenten aktuell assoziierter Funktionen durch auf der Anzeigeeinrichtung angezeigte Hinweisfelder zu kennzeichnen. Mit anderen Worten kann die Anzeigeeinrichtung an vordefinierten und zur Fingerleiste benachbarten Positionen Piktogramme und/oder Texte anzeigen, mittels welcher eine jeweilige Position auf der Fingerleiste als zu der Funktion/zum Favoriten gehörig gekennzeichnet wird.

Die Fingerleiste kann an einem distalen Ende eine Schaltfläche zur Entgegennahme von Tippgesten aufweisen, wobei die Schaltfläche insbesondere als eine jenseits eines Wischbereiches mit der Fingerleiste verlängerte Struktur ausgestaltet sein kann. Die Schaltfläche ist eingerichtet, im Ansprechen auf eine mittels der Erfassungseinheit erfasste Annäherung eine veränderte Lichtfarbe und/oder eine veränderte Helligkeit (aus dem Lichtauslass) auszusenden. Mit anderen Worten wird im Ansprechen auf eine erfasste Annäherung eines Anwenders die an mindestens einem distalen Ende angeordnete Schaltfläche optisch gegenüber dem Wischbereich und/oder sonstigen Segmenten der Fingerleiste optisch hervorgehoben. Dies weist den Anmelder darauf hin, dass eine Interaktion mit der Schaltfläche bzw. den Schaltflächen eine besondere Funktion (insbesondere gegenüber einer auf dem Wischbereich ausgeführten Wischgeste) zugeordnet ist.

Die Schaltfläche kann bzw. die Schaltflächen können eingerichtet sein, im Ansprechen auf eine mittels der Erfassungseinrichtung erfasste Berührungsgeste auf der Anzeigeeinrichtung eine Anzeige eines Favoritenauswahlfelds (z.B. nach Art eines Fensters, einer Schaltfläche o.ä.) zu veranlassen. Das Favoritenauswahlfeld kann beispielsweise für einen Wischgestenbereich der Fingerleiste vordefinierte Favoriten veranschaulichen. Beispielsweise kann das Favoritenauswahlfeld eine Liste der aktuell definierten Favoriten und/oder aktuell frei konfigurierbare (unbelegte) Favoritenpositionen kennzeichnen. Alternativ oder zusätzlich kann das Favoritenauswahlfeld zur Belegung eines Wischgestenbereiches der Fingerleiste mit Favoriten eingerichtet sein. Mit anderen Worten kann das Favoritenauswahlfeld Anwendereingaben entgegennehmen, im Ansprechen auf welche vordefinierte Positionen auf der Fingerleiste mit einem jeweiligen Favoriten belegt werden.

Eine Zuweisung eines Favoriten zu einer vordefinierten Position auf der Fingerleiste kann beispielsweise derart erfolgen, dass ein auf der Anzeigeeinheit angezeigtes Anzeige-und/oder Bedienelement mittels einer Wischgeste (Englisch "Drag- and Drop-Geste") auf eine Position innerhalb des Favoritenauswahlfeldes verschoben wird. Infolge dessen wird eine mit der Position innerhalb des Favoritenauswahlfeldes assoziierte Position auf der Fingerleiste mit dem Anzeigenelement bzw. einer dem Anzeigenelement zugeordneten Funktion assoziiert. Im Ergebnis kann eine Tippgeste auf die derart vordefinierte Position auf der Fingerleiste die zugeordnete Funktion starten. Selbstverständlich können unterschiedliche und vielzahlige Positionen innerhalb des Favoritenauswahlfeldes angezeigt bzw. vordefiniert sein, welche mit einer entsprechenden Vielzahl von Positionen auf der Fingerleiste korrespondieren.

Ferner kann die Fingerleiste einen Lichtauslass aufweisen, welcher eingerichtet ist, eine Position eines Favoriten durch Ausgabe einer gegenüber übrigen Positionen auf der Fingerleiste anderen Lichtfarbe optisch abzugrenzen. Beispielsweise kann eine Linienlichtquelle in bzw. parallel zur Fingerleiste vorgesehen sein, welche an der Position eines ersten Favoriten eine erste Farbe und an der Position eines zweiten Favoriten eine zweite Farbe ausstrahlt. Eine alternative Möglichkeit bzw. eine zusätzliche Möglichkeit zur Definition/Veranschaulichung der Positionen belegter und/oder belegbarer Favoriten besteht darin, dass eine für den Lichtauslass vordefinierte Hintergrundfarbe zumindest einmalig an einer Position eines jeweiligen Favoriten durch eine andere Lichtfarbe unterbrochen wird. Auf diese Weise wird der Anwender darauf hingewiesen, an welchen Positionen unterschiedliche Favoriten abgelegt sind bzw. abgelegt werden können. Eine Anwahl der Favoritenpositionen stellt sich daher umso einfacher und intuitiver dar.

Unter Vermittlung der Anzeigeeinrichtung, welche beispielsweise in unmittelbarer Nachbarschaft zu der Fingerleiste angeordnet sein kann, können vordefinierte Segmente der Fingerleiste bezüglich mit den Segmenten aktuell assoziierter Funktionen/Favoriten durch ein jeweiliges Hinweisfeld gekennzeichnet werden. Mit anderen Worten können Piktogramme und/oder Textbestandteile oberhalb bzw. unterhalb eines jeweiligen Segmentes der Fingerleiste eine mit dem Segment assoziierte Funktion versinnbildlichen. Dies verbessert die Orientierung des Anwenders bei der Bedienung von Favoriten mittels der Fingerleiste.

Bevorzugt ist die Auswerteeinheit eingerichtet, beim Ansprechen auf eine Anwendereingabe bezüglich eines der vordefinierten Segmente der Fingerleiste eine dem Segment zugeordnete Funktion zu starten. Dieser Vorgang kann als Aufruf bzw. eine Anwahl eines Favoriten verstanden werden. Insofern als eine direkte Anwahl der Funktion durch Interaktion mit dem Segment der Fingerleiste erfolgt, kann die Funktion auch als "Primärfunktion" aufgefasst werden.

Dieser Aufruf eines Favoriten kann eine Eingabe mit einer vordefinierten Mindestdauer (englisch "Longpress") erfordern, um eine kürzere Tippgeste lediglich zur Anzeige der auf der Anzeigeeinrichtung angezeigten Hinweisfelder zu veranlassen. Dies ermöglicht eine intuitive Unterstützung des Anwenders und eine aufgeräumte Bildschirmdarstellung der Anzeigeeinrichtung in einem Anzeigemodus.

Alternativ oder zusätzlich kann die Anzeigeeinrichtung eingerichtet sein, im Ansprechen auf eine Anwendereingabe bezüglich eines Hinweisfeldes dem Hinweisfeld zugeordnete Einträge anzuzeigen. Diese Einträge können auch als kontextbezogene Informationen und/oder Unterfunktionen bzw. "Sekundärfunktionen" verstanden werden. Beispielsweise kann eine als Favorit hinterlegte Funktionsgruppe innerhalb des Hinweisfeldes durch die zugeordneten Einträge feiner aufgegliedert werden, so dass noch exaktere Funktionsaufrufe mittels des Hinweisfeldes möglich sind. Die Einträge können nach Art einer Liste und/oder nach Art einer Piktogramm Ansammlung (z.B. innerhalb eines geschlossenen Feldes/Fensters) angezeigt werden. Hierbei stellt jeder Eintrag bzw. jedes Piktogramm eine eigene Schaltfläche dar, welche bei Erfassung einer zugeordneten Anwenderinteraktion einen jeweiligen Funktionsaufruf startet.

Gemäß einem zweiten Aspekt der vorliegenden Erfindung wird ein Fortbewegungsmittel (z.B. ein Pkw, ein Transporter, ein Lkw, ein Motorrad, ein Luft- und/oder Wasserfahrzeug) vorgeschlagen, welches eine Anwenderschnittstelle gemäß dem erstgenannten Erfindungsaspekt aufweist. Diese kann im Wesentlichen dauerhaft mechanisch und/oder informationstechnisch in das Fortbewegungsmittel integrierte Komponenten aufweisen. Die erfindungsgemäß verwendete Fingerleiste ermöglicht auch bei rasanter Fahrt über unebene Oberflächen eine sichere Führung des Fingers bei der Definition und/oder der Auswahl favorisierter Funktionsumfänge.

Gemäß beiden Erfindungsaspekten kann eine Tippeingabe mit einer vordefinierten Mindestdauer (Englisch "Longpress-Geste") auf die Fingerleiste vorgesehen sein, um gegenüber einem Aufruf einer Primärfunktion das der angewählten Position zugeordnete Hinweisfeld mit weiteren Einträgen zu Sekundärfunktionen einzublenden.

Bevorzugt kann eine Anwahl eines einzelnen Eintrages innerhalb des nun angezeigten Hinweisfeldes auch mittels einer Wischgeste über die Fingerleiste erfolgen (englisch "Scrollen"), wobei ein Abheben des Fingers von der Fingerleiste den aktuell angewählten Eintrag auswählt bzw. startet. Alternativ kann eine zusätzliche Geste auf eine beliebige Position der Fingerleiste erforderlich sein, um den derart ausgewählten Eintrag des Hinweisfeldes auszuwählen bzw. zu bestätigen.

Der Lichtauslass der erfindungsgemäß vorgeschlagenen bzw. verwendeten Fingerleiste kann vorgesehen sein, in einem aktuell nicht bedienten Zustand hinsichtlich der Helligkeit und der Farbe des ausgeschütteten Lichtes an eine Ambientebeleuchtung innerhalb des Fortbewegungsmittels angepasst zu werden.

Die Möglichkeit einer erfindungsgemäßen Verwendung der Fingerleiste kann unter Vermittlung der optionalen Annäherungssensorik angezeigt werden, indem eine Annäherung die distalen Schaltflächen der Fingerleiste in einer Farbe und/oder Helligkeit beleuchtet, welche sich von einer Farbe und/oder Helligkeit im Wischbereich der Fingerleiste zwischen den distalen Schaltflächen unterscheidet.

Um die Favoritenauswahlfelder zur Zuweisung bzw. zur Anwahl von Favoriten nicht zu unübersichtlich werden zu lassen, kann vorgesehen sein, dass eine erste distale Schaltfläche eine erste Vielzahl von Favoriten und eine zweite Schaltfläche eine zweite Vielzahl von Favoriten aufweist, welche sämtlich an unterschiedlichen Positionen der Fingerleiste verortet sind. Mit anderen Worten führt eine Tippgeste auf eine linke Schaltfläche zur Anzeige eines Favoritenauswahlfeldes mit Einträgen, repräsentierend die erste Hälfte der verfügbaren Favoritenpositionen und eine Tippgeste auf eine rechte Schaltfläche zur Anzeige eines Hinweisfeldes, umfassend die übrigen vordefinierten Favoritenpositionen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

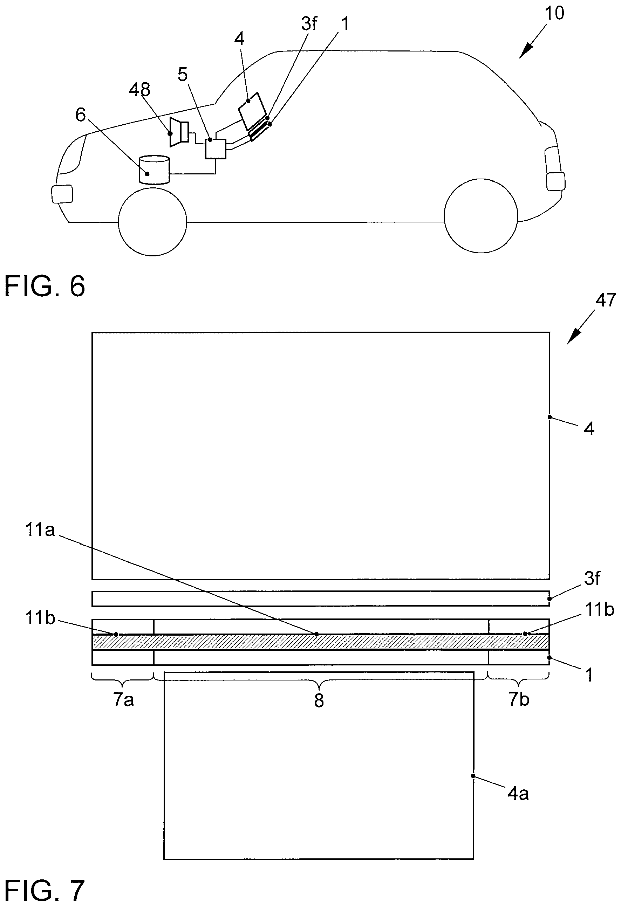

- Figur 6: eine Übersicht über Komponenten eines Ausführungsbeispiels eines erfindungsgemäßen Fortbewegungsmittels mit einem Ausführungsbeispiel einer erfindungsgemäßen Anwenderschnittstelle;
- Figur 7: eine schematische Ansicht auf Oberflächen eines Ausführungsbeispiels einer erfindungsgemäßen Anwenderschnittstelle;

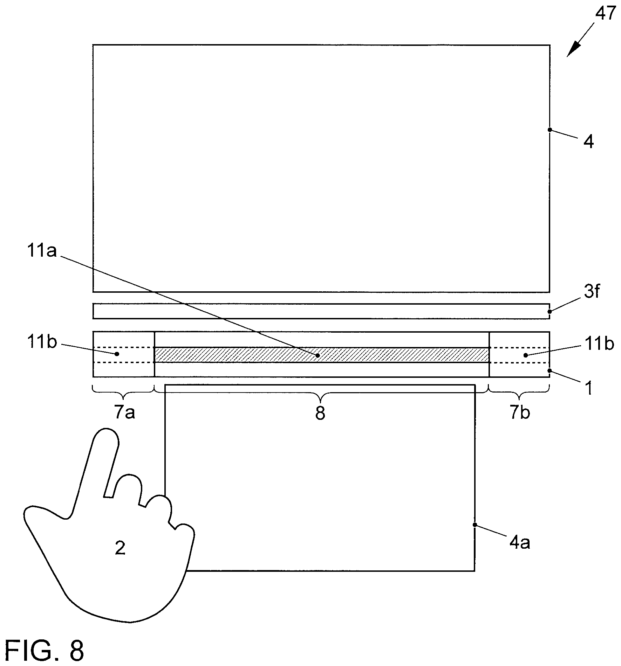

- Figur 8: eine Darstellung einer Annäherung eines Anwenders an das Ausführungsbeispiel der erfindungsgemäßen Anwenderschnittstelle;

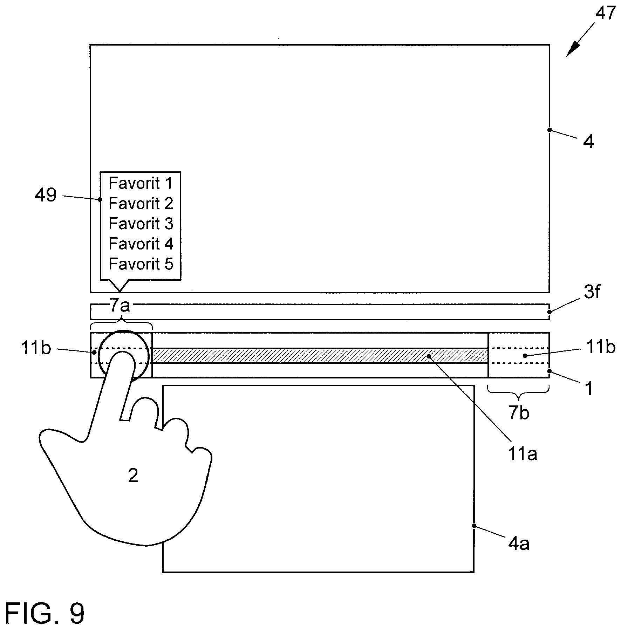

- Figur 9: eine Darstellung des Ergebnisses einer Tippgeste auf eine linke Schaltfläche der Fingerleiste des Ausführungsbeispiels der erfindungsgemäßen Anwenderschnittstelle;

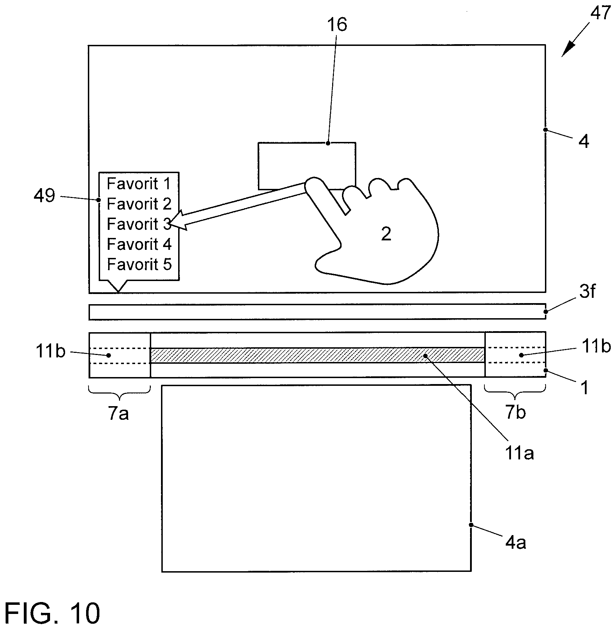

- Figur 10: eine Darstellung einer Wischgeste auf ein Hinweisfeld zur Definition eines Favoriten;

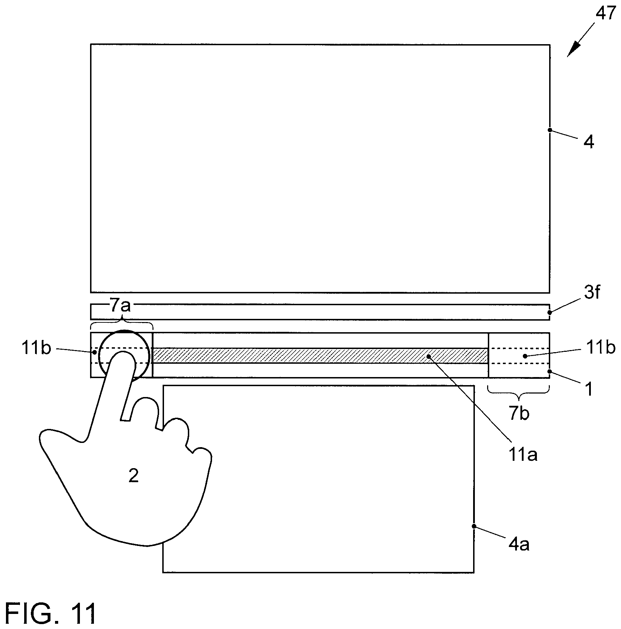

- Figur 11: eine Darstellung einer Tippgeste auf eine Schaltfläche einer Fingerleiste eines zweiten Ausführungsbeispiels einer erfindungsgemäßen Anwenderschnittstelle;

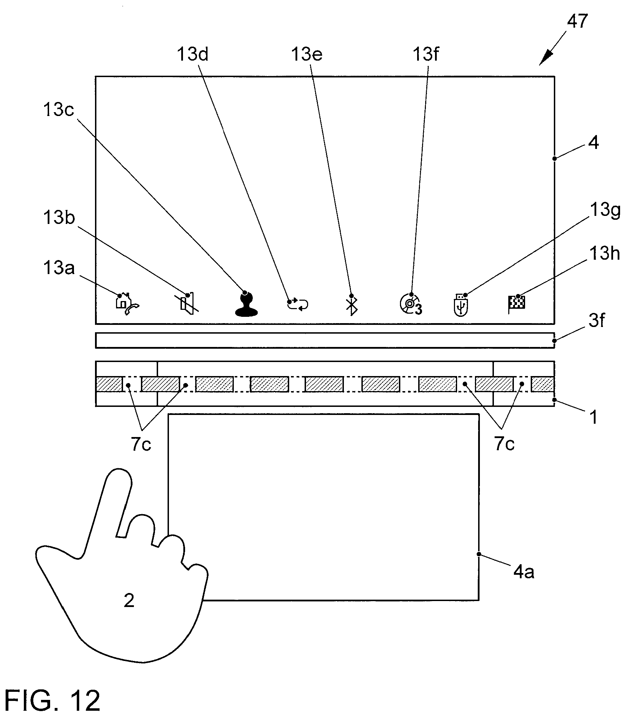

- Figur 12: eine Darstellung des Ergebnisses der in Figur 11 dargestellten Geste;

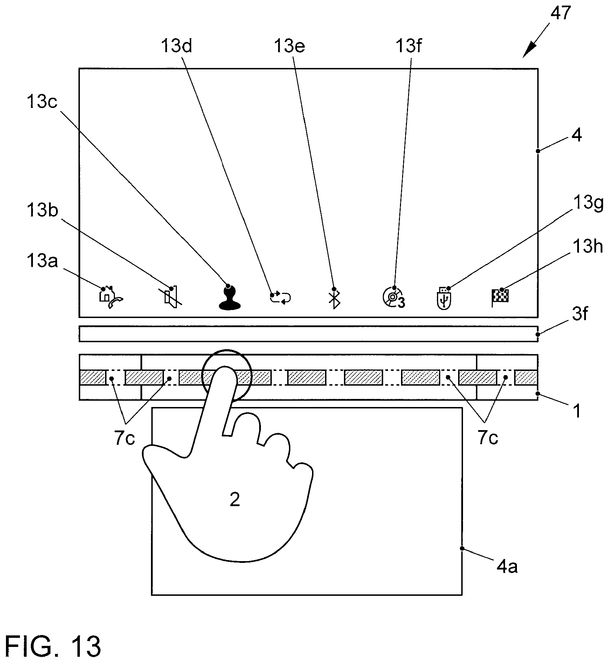

- Figur 13: eine Darstellung einer Tippgeste eines Anwenders auf eine mit einem Favoriten belegte Position auf einer Fingerleiste des zweiten Ausführungsbeispiels;

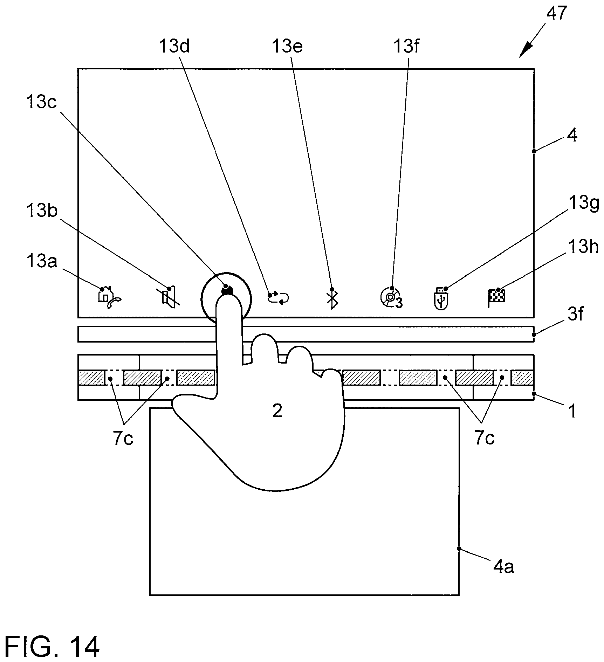

- Figur 14: eine Darstellung einer Tippgeste eines Anwenders auf ein dem in Figur 13 angewählten Favoriten zugeordnetes Hinweisfeld;

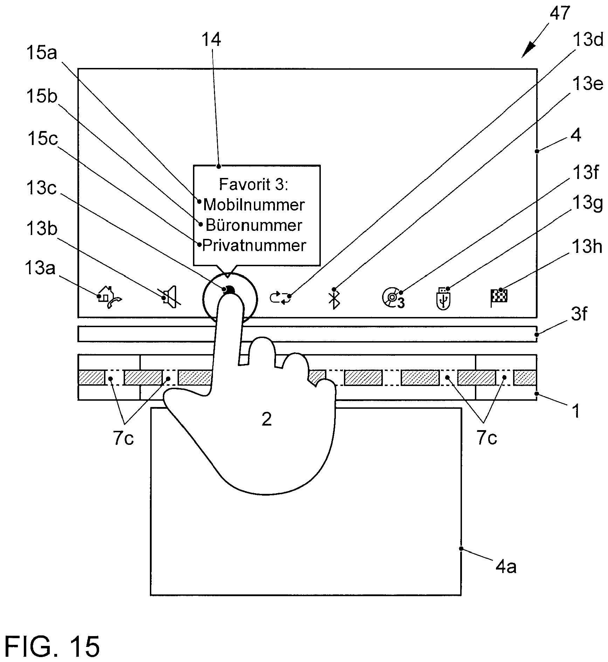

- Figur 15: eine Darstellung einer im Ansprechen auf die in Figur 14 dargestellten Tippgeste eingeblendete Sekundärfunktionsliste, umfassend Einträge repräsentierend Sekundärfunktionen; und

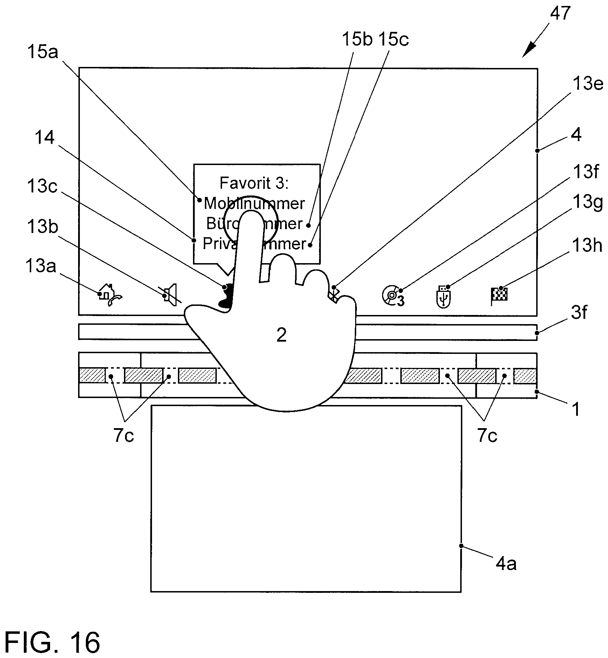

- Figur 16: eine Darstellung einer Tippgeste eines Anwenders auf einen Eintrag der Sekundärfunktionsliste.

### Ausführungsformen der Erfindung

Figur 6 zeigt einen Pkw 10 als Fortbewegungsmittel mit einem Ausführungsbeispiel einer erfindungsgemäßen Anwenderschnittstelle 47. Die Anwenderschnittstelle 47 umfasst einen Bildschirm 4 mit einer berührungsempfindlichen Oberfläche, welcher einen Bestandteil einer Anzeigeeinrichtung sowie einen Bestandteil einer Eingabeeinrichtung darstellt. Unterhalb des Bildschirms 4 sind eine Infrarot-LED-Leiste 3f sowie eine Fingerleiste 1 als weitere Bestandteile der Eingabeeinrichtung dargestellt. Der Bildschirm 4 und die Infrarot-LED-Leiste 3f sowie die Fingerleiste 1 sind informationstechnisch mit einem elektronischen Steuergerät 5 als Auswerteeinheit verbunden. Das elektronische Steuergerät 5 verfügt zudem über eine informationstechnische Anbindung an einen Datenspeicher 6, in welchem Instruktionen zum Betrieb der erfindungsgemäßen Anwenderschnittstelle sowie Referenzen zur Definition vordefinierter Anwenderinteraktionen (z.B. Wischgesten) abgespeichert sind. Schließlich ist auch ein Lautsprecher 48 vorgesehen und zur Ausgabe von Hinweis- und/oder Quittiertönen sowie zur Untermalung von Anwendereingaben und Reaktionen der Anwenderschnittstelle 47 auf die Anwendereingaben vorgesehen.

Figur 7 zeigt eine Ansicht auf Komponenten einer erfindungsgemäßen Anwenderschnittstelle 47, in welcher ein erster Bildschirm 2 und ein zweiter Bildschirm 4a zur Anordnung übereinander innerhalb eines Armaturenbrettes eines Fortbewegungsmittels vorgesehen sind. Zwischen den Bildschirmen 4, 4a sind eine Infrarot-LED-Leiste 3f und unterhalb dieser eine Fingerleiste 1 vorgesehen. Die Fingerleiste 1 gliedert sich in zwei distale Schaltflächen 7a, 7b, welche einen Wischgestenbereich 8 beidseitig begrenzen. Der Wischgestenbereich 8 weist einen Abschnitt 11a eines Lichtauslasses auf, welcher optisch im Wesentlichen nahtlos in zwei Abschnitte 11b des Lichtauslasses innerhalb der distalen Schaltflächen 7a, 7b übergeht.

Figur 8 zeigt das Ergebnis einer Annäherung einer Hand eines Anwenders 2 an die erfindungsgemäße Anwenderschnittstelle 47, im Ansprechen worauf die Abschnitte 11b des Lichtauslasses eine gegenüber einer vom Wischgestenbereich 8 ausgeschütteten Lichtfarbe veränderte Lichtfarbe aussenden. Überdies senden die Abschnitte 11a, 11b des Lichtauslasses im Ansprechen auf die erfasste Annäherung eine erhöhte Lichtintensität aus.

Figur 9 zeigt eine Tippgeste einer Hand eines Anwenders 2 auf eine links des Wischgestenbereiches 8 angeordnete Schaltfläche 7a, im Ansprechen worauf auf dem Bildschirm 4 oberhalb der Schaltfläche 7a ein Favoritenauswahlfeld 49 mit fünf Einträgen repräsentierend fünf unterschiedliche Positionen definierbarer Favoriten auf der Fingerleiste 1 angezeigt wird. Das Favoritenauswahlfeld 49 ist nach Art einer Liste gegliedert.

Figur 10 zeigt eine Wischgeste der Hand des Anwenders 47, welche auf einem Anzeigeelement 16, welches ebenfalls auf dem Bildschirm 4 dargestellt wird, startet, und auf dem Eintrag "Favorit 3" des Favoritenauswahlfeldes 49 endet. Auf diese Weise wird der mit dem "Favorit 3" assoziierten Position auf der Fingerleiste 1 dieselbe Funktion zugeordnet, welche sich durch eine Betätigung des Anzeigeelementes 16 starten lässt.

Figur 11 zeigt eine Tippgeste mit der Hand eines Anwenders 2 auf eine Schaltfläche 7a links des Wischgestenbereiches 8 der Fingerleiste 1 eines zweiten Ausführungsbeispiels einer erfindungsgemäßen Anwenderschnittstelle 47, dessen Merkmale in Verbindung mit den folgenden Figuren erläutert werden.

Figur 12 zeigt das Ergebnis der in Figur 11 veranschaulichten Tippgeste. Auf der Fingerleiste 1 werden nun einzelne Positionen 7c durch Ausschüttung einer veränderten Lichtfarbe aus dem Lichtauslass der Fingerleiste 1 markiert. Oberhalb der Positionen 7c zeigt der Bildschirm 4 Piktogramme 13a bis 13h, welche die den Positionen 7c zugeordneten Funktionsaufrufe inhaltlich veranschaulichen. Das Piktogramm 13a veranschaulicht das Anrufen einer vordefinierten Nummer. Das Piktogramm 13b veranschaulicht eine Audio-Mute-Funktion. Das Piktogramm 13c veranschaulicht den Aufruf eines vordefinierten Adressbucheintrages in Form zugeordneter Telefonnummern. Das Piktogramm 13d veranschaulicht eine wiederholte Wiedergabe von Medieninhalten. Das Piktogramm 13e veranschaulicht Funktionsumfänge einer Bluetooth-Verbindung. Das Piktogramm 13f veranschaulicht eine Wiedergabefunktion für einen Datenträger am optischen Laufwerk. Das Piktogramm 13g veranschaulicht einem USB-Datenspeicher zugeordnete Funktionsumfänge. Das Piktogramm 13h veranschaulicht einer Navigationsfunktion zugeordnete Funktionsumfänge.

Figur 13 zeigt eine Tippgeste eines Anwenders auf eine Position 7c auf der Fingerleiste 1, welche dem Piktogramm 13c und somit dem favorisierten Eintrag des Adressbuches zugeordnet ist. Im Ansprechen darauf wird eine vordefinierte Telefonnummer des Adressbucheintrages angewählt.

Figur 14 zeigt eine Tippgeste eines Anwenders auf das im Bildschirm 4 dargestellte Piktogramm 13c. Diese Eingabe wird durch eine berührungsempfindliche Oberfläche des Bildschirms 4 erfasst.

Figur 15 zeigt die Darstellung einer Sekundärfunktionsliste 14, welche im Ansprechen auf die Tippgeste bezüglich des Piktogramms 13c zusätzliche Details bzw. Sekundärfunktionen betreffend den "Favorit 3" enthält. Der Eintrag 15a ist eine Mobilnummer des Kontaktes. Der Eintrag 15b ist eine Büronummer des Kontaktes. Der Eintrag 15c ist eine Privatnummer des Kontaktes.

Figur 16 zeigt eine Tippgeste auf den Eintrag 15b innerhalb der Sekundärfunktionsliste 14, im Ansprechen worauf die Büronummer des Kontaktes gewählt wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Fingerleiste
- 2: Anwender
- 3: Erfassungseinheit
- 3a: kapazitive Antennen
- 3b: elektronische Bauteile
- 3c: kapazitive Antennen (Tastbereich)
- 3d: Träger
- 3e: Platine der Erfassungseinheit
- 3f: Infrarot-LED-Leiste
- 4, 4a: Bildschirm
- 5: elektronisches Steuergerät
- 6: Datenspeicher
- 7: Annäherungssensorik
- 7a, 7b: Schaltflächen der Fingerleiste
- 7c: Positionen
- 8: Wischgestenbereich der Fingerleiste
- 9: LED
- 10: PKW
- 11: Steg/Rahmenteil
- 11a, 11b: Segmente des Lichtauslasses
- 12: Sims
- 13a bis 13h: Piktogramme
- 14: Sekundärfunktionsliste
- 15a bis 15c: Einträge der Sekundärfunktionsliste 14
- 16: Anzeigeelement
- 40, 4a: Anzeigefläche
- 41, 42: haptische Grenzen
- 43, 44: Endbereiche
- 45: Lichtauslass
- 46: Lichtleiter
- 47: Anwenderschnittstelle
- 48: Lautsprecher
- 49: Favoritenauswahlfeld

## Patentansprüche

1. Anwenderschnittstelle für ein Fortbewegungsmittel umfassend
- eine Eingabeeinrichtung (1) zur Erfassung hinsichtlich zweier Dimensionen durch eine Struktur geführter eindimensionaler Wischgesten eines Anwenders, im Folgenden "Fingerleiste (1)" genannt,
- eine Anzeigeeinrichtung mit einer berührungsempfindlichen Oberfläche (4) und
- eine Auswerteeinheit (5), wobei
- die Anzeigeeinrichtung eingerichtet ist, ein Favoritenauswahlfeld anzuzeigen, um vordefinierte Positionen auf der Fingerleiste mit einem jeweiligen Favoriten zu belegen, und
- die Auswerteeinheit (5) eingerichtet ist,
- mittels der Fingerleiste (1) erfasste Wischgesten zur im Wesentlichen stufenlosen Anpassung einer Ausgabegröße auszuwerten und
- mittels der Fingerleiste (1) erfasste Tippeingaben zur Auswahl und mittels der berührungsempfindlichen Oberfläche der Anzeigeeinrichtung erfasste Wischgesten zur Definition von favorisierten Funktionsumfängen, nachfolgend "Favoriten" genannt, auszuwerten, wobei die Definition der Favoriten umfasst:
- im Ansprechen auf das Erfassen einer Wischgeste, welche auf einem auf der Anzeigeeinrichtung (4) dargestellten Anzeigeelement (16) startet und auf einem Eintrag des Favoritenauswahlleldes (49) endet, der mit diesem Eintrag assoziierten Position auf der Fingerleiste (1) einen dem Anzeigeelement (16) zugeordneten Funktionsumfang zuzuordnen.

2. Anwenderschnittstelle nach Anspruch 1 weiter umfassend
- eine Annäherungssensorik (3f), welche eingerichtet ist,
- eine Annäherung eines Anwenders zu erfassen und
- die Auswerteeinheit (5) eingerichtet ist, im Ansprechen auf eine erfasste Annäherung
- einen Lichtauslass (11a, 11b) der Fingerleiste (1) zur Ausschüttung einer veränderten Lichtfarbe und/oder Helligkeit zu veranlassen, und/oder
- vordefinierte Segmente der Fingerleiste (1) bezüglich mit den Segmenten aktuell assoziierter Funktionen durch auf der Anzeigeeinrichtung (4) angezeigte Hinweisfelder (13a-13h) zu kennzeichnen.

3. Anwenderschnittstelle nach Anspruch 2, wobei die Fingerleiste (1) an einem distalen Ende eine Schaltfläche (7a, 7b) zur Entgegennahme von Tippgesten aufweist, welche eingerichtet ist, im Ansprechen auf eine mittels der Annäherungssensorik (3f) erfasste Annäherung eine veränderte Lichtfarbe und/oder eine veränderte Helligkeit auszusenden.

4. Anwenderschnittstelle nach einem der vorstehenden Ansprüche, wobei
- die Fingerleiste (1) an einem distalen Ende eine Schaltfläche (7a, 7b) aufweist, welche eingerichtet ist, im Ansprechen auf eine mittels der Erfassungseinheit (1) erfasste Berührungsgeste auf der Anzeigeeinrichtung (4) eine Anzeige eines Favoritenauswahlfeldes (49)
- zur Kennzeichnung für einen Wischgestenbereich (8) der Fingerleiste (1) definierter Favoriten und/oder
- zur Belegung des Wischgestenbereiches (8) der Fingerleiste (1) mit Favoriten
zu veranlassen.

5. Anwenderschnittstelle nach Anspruch 4, wobei das Favoritenauswahlfeld (49) eine Vielzahl auf der Fingerleiste (1) angeordneter unterschiedlicher Favoritenpositionen kennzeichnet.

6. Anwenderschnittstelle nach einem der vorstehenden Ansprüche, wobei die Fingerleiste (1) einen Lichtauslass (11a, 11b) aufweist, welcher eingerichtet ist, eine Position eines Favoriten durch Ausgabe einer vordefinierten Lichtfarbe von übrigen Positionen auf der Fingerleiste (1) optisch abzugrenzen.

7. Anwenderschnittstelle nach einem der vorstehenden Ansprüche, wobei die Anzeigeeinrichtung (4) eingerichtet ist, vordefinierte Segmente der Fingerleiste (1) bezüglich mit den Segmenten aktuell assoziierter Funktionen und/oder Favoriten durch ein Hinweisfeld (13a-13h) zu kennzeichnen.

8. Anwenderschnittstelle nach Anspruch 7, wobei die Auswerteeinheit (5) eingerichtet ist, im Ansprechen auf eine Anwendereingabe bezüglich eines der vordefinierten Segmente der Fingerleiste (1) eine dem Segment zugeordnete Funktion zu starten.

9. Anwenderschnittstelle nach Anspruch 8, wobei die Anzeigeeinrichtung (4) eingerichtet ist, im Ansprechen auf eine Anwendereingabe bezüglich eines Hinweisfeldes (13a-13h) dem Hinweisfeld (13a-13h) zugeordnete Einträge (15a, 15b, 15c) in einer Sekundärfunktionsliste (14) anzuzeigen.

10. Anwenderschnittstelle nach Anspruch 9, wobei die Auswerteeinheit (5) eingerichtet ist, im Ansprechen auf eine Anwendereingabe bezüglich eines Eintrags der Sekundärfunktionsliste (14) eine dem Eintrag zugeordnete Funktion zu starten.

11. Fortbewegungsmittel umfassend eine Anwenderschnittstelle (47) nach einem der vorstehenden Ansprüche.

## Claims

1. User interface for a vehicle, comprising
- an input device (1) for detecting one-dimensional swiping gestures of a user guided by a structure with regard to two dimensions, hereinafter called a "finger strip (1),"
- a display device having a touch-sensitive surface (4), and
- an evaluation unit (5), wherein
- the display device is configured to display a favorites selection field in order to populate predefined positions on the finger strip with a respective favorite, and
- the evaluation unit (5) is configured
- to evaluate swiping gestures, detected by means of the finger strip (1), for the substantially stepless adjustment of an output variable, and
- to evaluate tapped inputs, detected by means of the finger strip (1), for selecting and swiping gestures, detected by means of the touch-sensitive surface of the display device, for defining favored function ranges, hereinafter referred to as "favorites," the definition of favorites comprising:
- assigning, in response to the detection of a swiping gesture which starts on a display element (16) displayed on the display device (4) and ends on an entry of the favorites selection field (49), a function range assigned to the display element (16) to the position on the finger strip (1) associated with this entry.

2. User interface according to Claim 1, further comprising
- a proximity sensor system (3f) which is configured
- to detect an approach of a user, and
- the evaluation unit (5) is configured, in response to a detected approach,
- to cause a light outlet (11a, 11b) of the finger strip (1) to emit a changed light color and/or brightness, and/or
- to identify, by information fields (13a-13h) displayed on the display device (4), predefined segments of the finger strip (1) relating to functions currently associated with the segments.

3. User interface according to Claim 2, wherein the finger strip (1) has, at a distal end, a button (7a, 7b) for receiving tapping gestures, which is configured to emit a changed light color and/or a changed brightness in response to an approach detected by means of the proximity sensor system (3f).

4. User interface according to any one of the preceding claims, wherein
- the finger strip (1) has, at a distal end, a button (7a, 7b) which in response to a touching gesture detected by means of the detection unit (1) is configured to cause a display of a favorites selection field (49) on the display device (4) in order to
- identify favorites defined for a swiping gesture area (8) of the finger strip (1), and/or
- populate the swiping gesture area (8) of the finger strip (1) with favorites.

5. User interface according to Claim 4, wherein the favorites selection field (49) identifies a plurality of different favorite positions arranged on the finger strip (1).

6. User interface according to any one of the preceding claims, wherein the finger strip (1) has a light outlet (11a, 11b) which is configured to visually delimit a position of a favorite from other positions on the finger strip (1) by outputting a predefined light color.

7. User interface according to any one of the preceding claims, wherein the display device (4) is configured to identify, by an information field (13a-13h), predefined segments of the finger strip (1) relating to functions and/or favorites currently associated with the segments.

8. User interface according to Claim 7, wherein in response to a user input relating to one of the predefined segments of the finger strip (1), the evaluation unit (5) is configured to launch a function assigned to the segment.

9. User interface according to Claim 8, wherein in response to a user input relating to an information field (13a-13h), the display device (4) is configured to display, in a secondary function list (14), entries (15a, 15b, 15c) assigned to the information field (13a-13h).

10. User interface according to Claim 9, wherein in response to a user input relating to an entry in the secondary function list (14), the evaluation unit (5) is configured to launch a function assigned to the entry.

11. Vehicle comprising a user interface (47) according to any one of the preceding claims.

## Revendications

1. Interface utilisateur pour un moyen de transport comprenant
- un dispositif d'entrée (1) destiné à effectuer une détection bidimensionnelle de gestes de glissement unidirectionnels d'un utilisateur guidés par une structure, désigné ci-après « rail pour les doigts » (1),
- un dispositif d'affichage comprenant une surface tactile (4) et
- une unité de traitement (5),
- le dispositif d'affichage étant conçu pour afficher un champ de sélection de favoris, afin de programmer des positions prédéfinies sur le rail pour les doigts avec un favori respectif et
- l'unité de traitement (5) étant conçue
- pour traiter des gestes de glissement détectés, au moyen du rail pour les doigts (1), pour l'adaptation de façon sensiblement continue d'une grandeur de sortie et
- pour traiter des entrées par impulsions détectées, au moyen du rail pour les doigts (1), pour la sélection d'étendues de fonctions, ci-après désignées « favoris » et des gestes de glissement détectés au moyen de la surface tactile du dispositif d'affichage pour la définition des favoris, la définition des favoris comprenant :
- en réponse à la détection d'un geste de glissement, qui démarre sur l'élément d'affichage (16) représenté sur le dispositif d'affichage (4) et se termine sur une entrée du champ de sélection de favoris (49), pour attribuer à la position associée à cette entrée sur le rail pour les doigts (1) une étendue de fonctions attribuée à l'élément d'affichage (16).

2. Interface utilisateur selon la revendication 1, comprenant en outre
- un détecteur de présence (3f), qui est conçu
- pour détecter une présence d'un utilisateur et
- l'unité de traitement (5) est conçue, en réponse à une présence détectée
- pour provoquer une sortie lumineuse (11a, 11b) du rail pour les doigts (1) pour émettre une couleur lumineuse et/ou une luminosité et/ou
- pour marquer des segments prédéfinis du rail pour les doigts (1) par rapport à des fonctions réellement associées aux segments par le biais de champs de remarque (13a-13h) affichés sur le dispositif d'affichage (4).

3. Interface utilisateur selon la revendication 2, dans laquelle le rail pour les doigts (1) présente, à une extrémité distale, un bouton (7a, 7b) pour la réception de gestes d'impulsion, conçu pour, en réponse à une présence détectée au moyen du détecteur de présence (3f), émettre une couleur modifiée et/ou une luminosité modifiée.

4. Interface utilisateur selon l'une quelconque des revendications précédentes,
- le rail pour les doigts (1) présentant, à une extrémité distale, un bouton (7a, 7b) conçu, en réponse à un geste de mouvement détecté au moyen de l'unité de détection (1) sur le dispositif d'affichage (4), pour provoquer un affichage d'un champ de sélection de favoris (49)
- pour marquer, pour une zone de geste de glissement (8) du rail pour les doigts (1), des favoris définis et/ou
- pour programmer la zone de geste de glissement (8) du rail pour les doigts (1 ) avec des favoris.

5. Interface utilisateur selon la revendication 4, le champ de sélection de favoris (49) marquant une pluralité de positions de favoris différentes disposées sur le rail pour les doigts (1).

6. Interface utilisateur selon l'une quelconque des revendications précédentes, le rail pour les doigts (1) présentant une sortie lumineuse (11a, 11b), qui est conçue pour délimiter de manière optique une position d'un favori par émission d'une couleur lumineuse prédéfinie depuis les autres positions sur le rail pour les doigts (1).

7. Interface utilisateur selon l'une quelconque des revendications précédentes, le dispositif d'affichage (4) étant conçu pour marquer des segments prédéfinis du rail pour les doigts (1) par rapport à des fonctions et/ou favoris réellement associés aux segments par le biais d'un champ de remarque (13a-13h).

8. Interface utilisateur selon la revendication 7, l'unité de traitement (5) étant conçue, en réponse à une entrée utilisateur concernant un des segments prédéfinis du rail pour les doigts (1), pour démarrer une fonction associée au segment.

9. Interface utilisateur selon la revendication 8, le dispositif d'affichage (4) étant conçu, en réponse à une entrée utilisateur concernant un champ de remarque (13a-13h), pour afficher les entrées (15a, 15b, 15c) attribuées au champ de remarque (13a-13h) dans une liste de fonctions secondaires (14).

10. Interface utilisateur selon la revendication 9, l'unité de traitement (5) étant conçue, en réponse à une entrée utilisateur concernant une entrée de la liste de fonctions secondaires (14), pour démarrer une fonction associée à l'entrée.

11. Moyens de transport comprenant une interface utilisateur (47) selon l'une quelconque des revendications précédentes.
